# EUROPEAN PATENT APPLICATION

(11) **EP 4 682 202 A1**
(43) Date of publication of application: **21.01.2026**
(21) Application number: 24771092.4
(22) Date of filing: 04.03.2024
(51) Int. Cl.: C08L 67/02, C08L 25/12, C08L 25/14, C08L 35/06, C08L 55/02

(54) **THERMOPLASTIC RESIN COMPOSITION AND MOLDED ARTICLE USING SAME**

(30) Priority: 13.03.2023 KR 20230032721
(71) Applicant: LOTTE CHEMICAL CORPORATION, Seoul 05551 (KR)
(72) Inventor: LEE, Yujin, Uiwang-si, Gyeonggi-do 16073 (KR); PARK, Jungeun, Uiwang-si, Gyeonggi-do 16073 (KR); CHU, Donghui, Uiwang-si, Gyeonggi-do 16073 (KR)
(74) Representative: Germain Maureau
(86) International application number: PCT/KR2024/002716
(87) International publication number: WO 2024/191092

(57) **Abstract**

The present invention relates to a thermoplastic resin composition and a molded article using same. In an embodiment, provided is a thermoplastic resin composition including (B) 1 to 5 parts by weight of an aromatic vinyl compound-vinyl cyanide compound-maleic anhydride copolymer, based on (A) 100 parts by weight of a base resin including: (A-1) 10 to 25 wt% of a butadiene-based rubber-modified aromatic vinyl compound-vinyl cyanide compound graft copolymer; (A-2) 20 to 40 wt% of a polybutylene terephthalate resin; (A-3) 25 to 45 wt% of an aromatic vinyl compound-vinyl cyanide compound copolymer; (A-4) 2 to 6 wt% of an epoxy group-containing (meth)acrylate-aromatic vinyl compound-vinyl cyanide compound copolymer; and (A-5) 15 to 25 wt% of an α-methylstyrene-aromatic vinyl compound-vinyl cyanide compound copolymer.

## Description

### [Technical Field]

A thermoplastic resin composition and a molded article using same are disclosed.

### [Background Art]

An acrylonitrile-butadiene-styrene copolymer (ABS) resin, which is mainly used in interior materials for a vehicle, is known as a thermoplastic resin with lower specific gravity than that of glass or metal and excellent molding property, chemical resistance, and the like. However, the acrylonitrile-butadiene-styrene copolymer resin alone may hardly exhibit sufficient light resistance, chemical resistance, and the like under optical exposure such as ultraviolet (UV) light and the like. On the other hand, the acrylonitrile-butadiene-styrene copolymer resin may be also used in combination with a polyester resin under presence of an acrylic copolymer as a compatibilizer. Herein, properties such as chemical resistance, impact resistance, heat resistance, and the like may be improved, but there is a problem of reducing fluidity due to large proportion of the acrylic copolymer.

### [Disclosure]

### [Technical Problem]

Provided is a thermoplastic resin composition that exhibits excellent low-odor characteristics, chemical resistance, heat resistance, fluidity, and impact resistance.

### [Technical Solution]

In an embodiment, provided is a thermoplastic resin composition which includes (B) 1 to 5 parts by weight of an aromatic vinyl compound-vinyl cyanide compound-maleic anhydride copolymer, based on (A) 100 parts by weight of a base resin including: (A-1) 10 to 25 wt% of a butadiene-based rubber-modified aromatic vinyl compound-vinyl cyanide compound graft copolymer; (A-2) 20 to 40 wt% of a polybutylene terephthalate resin; (A-3) 25 to 45 wt% of an aromatic vinyl compound-vinyl cyanide compound copolymer; (A-4) 2 to 6 wt% of an epoxy group-containing (meth)acrylate-aromatic vinyl compound-vinyl cyanide compound copolymer; and (A-5) 15 to 25 wt% of an α-methylstyrene-aromatic vinyl compound-vinyl cyanide compound copolymer.

The (A-1) butadiene-based rubber-modified aromatic vinyl compound-vinyl cyanide compound graft copolymer may be a particle having a core-shell structure including a core composed of a butadiene-based rubbery polymer; and a shell formed by graft polymerization of an aromatic vinyl compound-vinyl cyanide compound copolymer onto the core.

The (A-1) butadiene-based rubber-modified aromatic vinyl compound-vinyl cyanide compound graft copolymer may be an acrylonitrile-butadiene-styrene graft copolymer.

The (A-2) polybutylene terephthalate resin may have an intrinsic viscosity [η] of 0.6 to 1.5 dl/g as measured according to ASTM D4603.

The (A-3) aromatic vinyl compound-vinyl cyanide compound copolymer may be a styrene-acrylonitrile copolymer.

The (A-4) epoxy group-containing (meth)acrylate-aromatic vinyl compound-vinyl cyanide compound copolymer may be a glycidyl methacrylate-styrene-acrylonitrile copolymer.

The (A-5) α-methylstyrene-aromatic vinyl compound-vinyl cyanide compound copolymer may be an α-methylstyrene-styrene-acrylonitrile copolymer.

The (B) aromatic vinyl compound-vinyl cyanide compound-maleic anhydride copolymer may be a styrene-acrylonitrile-maleic anhydride copolymer.

In an embodiment, the thermoplastic resin composition may further include 1 to 5 parts by weight of (C) a butadiene-based rubber-modified aromatic vinyl compound-alkyl (meth)acrylate graft copolymer.

In another embodiment, a molded article using the thermoplastic resin composition is provided.

The molded article may have a notched Izod impact strength of greater than or equal to 9 kgf·cm/cm as measured on a 1/8"-thick specimen according to ASTM D256.

The molded article may have a melt flow index (MI) of greater than or equal to 17 g/10 min measured at 250 °C and 5 kg according to ISO 1133.

The molded article may have a heat deflection temperature (HDT) of greater than or equal to 100 °C measured under a load of 4.6 kgf/cm² on a 6.4 mm-thick specimen according to ASTM D648.

### [Advantageous Effects]

The thermoplastic resin composition of an embodiment exhibits excellent low-odor characteristics, chemical resistance, heat resistance, fluidity, and impact resistance, so that a molded article using the composition is suitable for use as an interior material for automobiles.

### [Best Mode]

Hereinafter, embodiments of the present invention are described in detail. However, these embodiments are exemplary, and this disclosure is not limited thereto.

### (Definition of Terms)

In this specification, the 'average particle size' of the rubbery polymer refers to a volume average particle size, which is the Z-average particle size measured using a dynamic light scattering (DLS) analysis device.

In this specification, the 'weight average molecular weight' and 'number average molecular weight' may be measured by dissolving a powder sample in an appropriate solvent and then using Agilent Technologies' 1200 series gel permeation chromatography (GPC) (Shodex polystyrene is used as the standard sample).

### (Thermoplastic Resin Composition)

In an embodiment, provided is a thermoplastic resin composition including (B) 1 to 5 parts by weight of an aromatic vinyl compound-vinyl cyanide compound-maleic anhydride copolymer based on (A) 100 parts by weight of a base resin including: (A-1) 10 to 25 wt% of a butadiene-based rubber-modified aromatic vinyl compound-vinyl cyanide compound graft copolymer; (A-2) 20 to 40 wt% of a polybutylene terephthalate resin; (A-3) 25 to 45 wt% of an aromatic vinyl compound-vinyl cyanide compound copolymer; (A-4) 2 to 6 wt% of an epoxy group-containing (meth)acrylate-aromatic vinyl compound-vinyl cyanide compound copolymer; and (A-5) 15 to 25 wt% of an α-methylstyrene-aromatic vinyl compound-vinyl cyanide compound copolymer.

When adding the (A-5) α-methylstyrene-aromatic vinyl compound-vinyl cyanide compound copolymer to a mixture of the (A-1) butadiene-based rubber-modified aromatic vinyl compound-vinyl cyanide compound graft copolymer and the (A-2) polybutylene terephthalate resin, heat resistance and low-odor characteristics increase, but impact resistance and fluidity may decrease.

Here, by adding the (A-4) epoxy group-containing (meth)acrylate-aromatic vinyl compound-vinyl cyanide compound copolymer and the (B) aromatic vinyl compound-vinyl cyanide compound-maleic anhydride copolymer, heat resistance, low-odor characteristics, impact resistance, and fluidity may be harmoniously secured. Here, heat resistance and chemical resistance can be improved by adding the (A-3) aromatic vinyl compound-vinyl cyanide compound copolymer.

In this regard, the thermoplastic resin composition of an embodiment may exhibit excellent low-odor characteristics, chemical resistance, heat resistance, fluidity, and impact resistance. Accordingly, a molded article using the thermoplastic resin composition of an embodiment is particularly suitable for use as an interior material for automobiles.

Hereinafter, the thermoplastic resin composition will be described in more detail.

### [(A) Base Resin]

### (A-1) Butadiene-based Rubber-modified Aromatic Vinyl Compound-Vinyl Cyanide Compound Graft Copolymer

In the thermoplastic resin composition of an embodiment, the (A-1) butadiene-based rubber-modified aromatic vinyl compound-vinyl cyanide compound graft copolymer acts as an impact modifier that improves impact resistance.

The (A-1) butadiene-based rubber-modified aromatic vinyl compound-vinyl cyanide compound graft copolymer may be a particle having a core-shell structure, including core composed of a butadiene-based rubbery polymer; and a shell formed by graft polymerization of an aromatic vinyl compound-vinyl cyanide compound copolymer onto the core.

The (A-1) butadiene-based rubber-modified aromatic vinyl compound-vinyl cyanide compound graft copolymer may be produced by graft polymerizing a monomer mixture including an aromatic vinyl compound and a vinyl cyanide compound onto a butadiene-based rubbery polymer. The polymerization method may utilize a conventional manufacturing method, such as emulsion polymerization, suspension polymerization, solution polymerization, and bulk polymerization.

The butadiene-based rubbery polymer constituting the core of the (A-1) butadiene-based rubber-modified aromatic vinyl compound-vinyl cyanide compound graft copolymer may have an average particle diameter of 100 to 400 nm, or specifically 100 to 300 nm. When the above range is satisfied, a thermoplastic resin composition including the same may exhibit excellent appearance and impact resistance.

The butadiene-based rubbery polymer may be selected from the group consisting of a butadiene rubbery polymer, a butadiene-styrene rubbery polymer, a butadiene-acrylonitrile rubbery polymer, a butadiene-acrylate rubbery polymer, and a mixture thereof.

Meanwhile, the aromatic vinyl compound forming the shell of the (A-1) butadiene-based rubber-modified aromatic vinyl compound-vinyl cyanide compound graft copolymer may be styrene, α-methylstyrene, p-methylstyrene, p-t-butylstyrene, 2,4-dimethylstyrene, chlorostyrene, vinyltoluene, vinyl naphthalene, or a combination thereof, and specifically, styrene may be used. In addition, the vinyl cyanide compound forming the shell of the (A-1) butadiene-based rubber-modified aromatic vinyl compound-vinyl cyanide compound graft copolymer may be acrylonitrile, methacrylonitrile, or a combination thereof, and specifically, acrylonitrile may be used.

The shell of the (A-1) butadiene-based rubber-modified aromatic vinyl compound-vinyl cyanide compound graft copolymer may be formed by graft polymerizing a monomer mixture of 60 to 80 wt% of the aromatic vinyl compound and 20 to 40 wt% of the vinyl cyanide compound onto the core.

Based on the solid content of the (A-1) butadiene-based rubber-modified aromatic vinyl compound-vinyl cyanide compound graft copolymer, an amount of the core composed of a butadiene-based rubbery polymer may be 40 to 60 wt%.

For example, the (A-1) butadiene-based rubber-modified aromatic vinyl compound-vinyl cyanide compound graft copolymer may be an acrylonitrile-butadiene-styrene graft copolymer (g-ABS).

The (A-1) butadiene-based rubber-modified aromatic vinyl compound-vinyl cyanide compound graft copolymer may be used in a range of greater than or equal to 10 wt%, greater than or equal to 13 wt%, or greater than or equal to 15 wt%, but less than or equal to 25 wt%, less than or equal to 23 wt%, or less than or equal to 20 wt%, based on 100 wt% of the above (A) base resin.

### (A-2) Polybutylene Terephthalate Resin

In the thermoplastic resin composition of an embodiment, the (A-2) polybutylene terephthalate (PBT) resin plays a role in improving chemical resistance.

The (A-2) polybutylene terephthalate resin may be a polybutylene terephthalate polymer obtained by direct esterification reaction between 1,4-butanediol and terephthalic acid or dimethyl terephthalate, or by condensation polymerization through ester exchange reaction. In addition, for impact strength and surface modification, a copolymer in which the polybutylene terephthalate polymer is copolymerized with an impact-improving component such as polytetramethylene glycol (PTMG), polyethylene glycol (PEG), polypropylene glycol (PPG), aliphatic polyester, or aliphatic polyamide, or a blend composition in which these impact-improving components are blended, such as modified polybutylene terephthalate, may be used.

The (A-2) polybutylene terephthalate resin may have an intrinsic viscosity [η] measured according to ASTM D4603 of 0.6 to 1.5 dl/g, for example, 0.5 to 1.4 dl/g. When the intrinsic viscosity of the (A-2) polybutylene terephthalate resin satisfies the above range, a thermoplastic resin composition including the same may exhibit excellent chemical resistance, fluidity, etc.

The (A-2) polybutylene terephthalate resin may be used in a range of greater than or equal to 20 wt%, greater than or equal to 23 wt%, greater than or equal to 25 wt%, or greater than or equal to 27 wt%, and less than or equal to 40 wt%, less than or equal to 37 wt%, less than or equal to 35 wt%, or less than or equal to 33 wt%, based on 100 wt% of the (A) base resin.

### (A-3) Aromatic Vinyl Compound-Vinyl Cyanide Compound Copolymer

In the thermoplastic resin composition of an embodiment, the (A-3) aromatic vinyl compound-vinyl cyanide compound copolymer can improve fluidity.

Specifically, the (A-3) aromatic vinyl compound-vinyl cyanide compound copolymer may be produced by copolymerizing a monomer mixture including an aromatic vinyl compound and a vinyl cyanide compound. The copolymerization method may utilize a conventional manufacturing method, such as emulsion polymerization, suspension polymerization, solution polymerization, and bulk polymerization.

The aromatic vinyl compound forming the (A-3) aromatic vinyl compound-vinyl cyanide compound copolymer may include substituted or unsubstituted styrene. The substituent of the styrene may include a halogen or a C1 to C10 alkyl group, but an α-methyl group is excluded. Additionally, the vinyl cyanide compound forming the (A-3) aromatic vinyl compound-vinyl cyanide compound copolymer may be acrylonitrile, methacrylonitrile, fumaronitrile, or a combination thereof.

For example, the (A-3) aromatic vinyl compound-vinyl cyanide compound copolymer may be a styrene-acrylonitrile copolymer (SAN).

Additionally, the weight average molecular weight of the (A-3) aromatic vinyl compound-vinyl cyanide compound copolymer may be 90,000 to 200,000 g/mol. When the weight average molecular weight of the (A-3) aromatic vinyl compound-vinyl cyanide compound copolymer satisfies the above range, a thermoplastic resin composition including the same may exhibit excellent impact resistance and fluidity.

The (A-3) aromatic vinyl compound-vinyl cyanide compound copolymer may be used in a range of greater than or equal to 25 wt%, greater than or equal to 27 wt%, or greater than or equal to 30 wt%, and less than or equal to 45 wt%, less than or equal to 40 wt%, or less than or equal to 35 wt%, based on 100 wt% of the (A) base resin.

### (A-4) Epoxy group-containing (Meth)acrylate-Aromatic Vinyl Compound-Vinyl Cyanide Compound Copolymer

In the thermoplastic resin composition of an embodiment, the (A-4) epoxy group-containing (meth)acrylate-aromatic vinyl compound-vinyl cyanide compound copolymer may improve the miscibility between the components of the thermoplastic resin composition, thereby maximizing the effect of improving the physical properties of each component included in the thermoplastic resin composition.

The (A-4) epoxy group-containing (meth)acrylate-aromatic vinyl compound-vinyl cyanide compound copolymer may be produced by copolymerizing a monomer mixture including an epoxy group-containing (meth)acrylate, an aromatic vinyl compound, and a vinyl cyanide compound. The copolymerization may be performed by a known polymerization method such as emulsion polymerization, suspension polymerization, or bulk polymerization.

The epoxy group-containing (meth)acrylate may be an epoxy group-containing (meth)acrylate such as glycidyl methacrylate or glycidyl acrylate. These may be applied alone or in combination of two or more.

The aromatic vinyl compound may be styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like, but is not limited thereto. These may be applied alone or in combination of two or more.

Additionally, the vinyl cyanide compound may be acrylonitrile, methacrylonitrile, or a combination thereof.

For example, the (A-4) epoxy group-containing (meth)acrylate-aromatic vinyl compound-vinyl cyanide compound copolymer may be a glycidyl methacrylate-styrene-acrylonitrile copolymer (GMA-SAN or SAG).

A weight average molecular weight of the (A-4) epoxy group-containing (meth)acrylate-aromatic vinyl compound-vinyl cyanide compound copolymer may be 100,000 to 200,000 g/mol. When the weight average molecular weight of the (A-4) epoxy group-containing (meth)acrylate-aromatic vinyl compound-vinyl cyanide compound copolymer satisfies the above range, a thermoplastic resin composition including the same may exhibit excellent miscibility.

The (A-4) epoxy group-containing (meth)acrylate-aromatic vinyl compound-vinyl cyanide compound copolymer may be used in an amount of greater than or equal to 2 wt%, or greater than or equal to 3 wt%, and less than or equal to 6 wt%, less than or equal to 5 wt%, or less than or equal to 4 wt%, based on 100 wt% of the above (A) base resin.

### (A-5) α-Methylstyrene-Aromatic Vinyl Compound-Vinyl Cyanide Compound Copolymer

**In** a thermoplastic resin composition of an embodiment, the (A-5) α-methylstyrene-aromatic vinyl compound-vinyl cyanide compound copolymer may improve heat resistance.

The (A-5) α-methylstyrene-aromatic vinyl compound-vinyl cyanide compound copolymer may be a copolymer of a monomer mixture including 50 to 60 wt% of α-methylstyrene, 15 to 25 wt% of aromatic vinyl compound, and 15 to 35 wt% of vinyl cyanide compound. **In** the above weight range, the thermoplastic resin composition may have excellent discoloration stability and heat resistance.

The aromatic vinyl compound may include substituted or unsubstituted styrene. The substituent of the styrene may include a halogen or a C1 to C10 alkyl group, but an α-methyl group is excluded. Additionally, the vinyl cyanide compound may be acrylonitrile, methacrylonitrile, fumaronitrile, or a combination thereof.

A weight average molecular weight of the (A-5) α-methylstyrene-aromatic vinyl compound-vinyl cyanide compound may be 100,000 to 200,000 g/mol. When the weight average molecular weight of the (A-5) α-methylstyrene-aromatic vinyl compound-vinyl cyanide compound satisfies the above range, a thermoplastic resin composition including the same may exhibit excellent impact resistance and fluidity.

For example, the (A-5) α-methylstyrene-aromatic vinyl compound-vinyl cyanide compound copolymer may be an α-methylstyrene-styrene-acrylonitrile copolymer (AMS-SAN).

The (A-5) α-methylstyrene-aromatic vinyl compound-vinyl cyanide compound copolymer may be used in a range of greater than or equal to 15 wt%, or greater than or equal to 17 wt%, and less than or equal to 25 wt%, or less than or equal to 23 wt%, based on 100 wt% of the (A) base resin.

### [(B) Aromatic Vinyl Compound-Vinyl Cyanide Compound-Maleic Anhydride Copolymer]

In the thermoplastic resin composition of an embodiment, the (B) aromatic vinyl compound-vinyl cyanide compound-maleic anhydride copolymer may complement the role of the (A-4) epoxy group-containing (meth)acrylate-aromatic vinyl compound-vinyl cyanide compound copolymer. Specifically, it is possible to further increase the miscibility between the components of a thermoplastic resin composition, thereby complementing the property improvement effect of each component included in the thermoplastic resin composition.

The thermoplastic resin composition of an embodiment may include 1 to 5 parts by weight of the (B) aromatic vinyl compound-vinyl cyanide compound-maleic anhydride copolymer, based on 100 parts by weight of the (A) base resin. Within the above range, the miscibility between the components of the thermoplastic resin composition is further increased, and the effect of improving the physical properties of each component included in the thermoplastic resin composition (e.g., impact resistance, fluidity, etc.) may be supplemented. However, if the above (B) aromatic vinyl compound-vinyl cyanide compound-maleic anhydride copolymer exceeds 5 parts by weight, the viscosity of the thermoplastic resin composition may increase, making molding difficult, and if it is less than 1 part by weight, the effect of improving miscibility and thus improving physical properties may be minimal.

The (B) aromatic vinyl compound-vinyl cyanide compound-maleic anhydride copolymer may be obtained by copolymerization of a monomer mixture including an aromatic vinyl compound, a vinyl cyanide compound, and maleic anhydride. The copolymerization method may utilize a conventional manufacturing method, such as emulsion polymerization, suspension polymerization, solution polymerization, and bulk polymerization.

The aromatic vinyl compound may be styrene, α-methylstyrene, p-methylstyrene, p-t-butylstyrene, 2,4-dimethylstyrene, chlorostyrene, vinyltoluene, vinyl naphthalene, or a combination thereof. Additionally, the vinyl cyanide compound may be acrylonitrile, methacrylonitrile, or a combination thereof.

For example, the (B) aromatic vinyl compound-vinyl cyanide compound-maleic anhydride copolymer may be a styrene-acrylonitrile-maleic anhydride copolymer (SAN-MAH).

Additionally, a weight average molecular weight of the (B) aromatic vinyl compound-vinyl cyanide compound-maleic anhydride copolymer may be 90,000 to 200,000 g/mol. When the weight average molecular weight of the (B) aromatic vinyl compound-vinyl cyanide compound-maleic anhydride copolymer satisfies the above range, a thermoplastic resin composition including the same may exhibit excellent impact resistance and fluidity.

### [(C) Butadiene-based Rubber Modified Aromatic Vinyl Compound-Alkyl (meth)acrylate Graft Copolymer]

The thermoplastic resin composition of an embodiment may further include (C) a butadiene-based rubber-modified aromatic vinyl compound-alkyl (meth)acrylate graft copolymer. This is a type of impact modifier and may play a role in improving the impact resistance of a thermoplastic resin composition.

The (C) butadiene-based rubber-modified aromatic vinyl compound-alkyl (meth)acrylate graft copolymer may be a particle having a core-shell structure, including a core composed of a butadiene-based rubbery polymer; and a shell formed by graft polymerizing an aromatic vinyl compound-alkyl (meth)acrylate copolymer onto the core.

The (C) butadiene-based rubber-modified aromatic vinyl compound-alkyl (meth)acrylate graft copolymer may be produced by graft polymerizing a monomer mixture containing an aromatic vinyl compound and an alkyl (meth)acrylate onto a butadiene-based rubbery polymer. The polymerization method may utilize a conventional manufacturing method, such as emulsion polymerization, suspension polymerization, solution polymerization, and bulk polymerization.

The butadiene-based rubbery polymer may be selected from the group consisting of a butadiene rubbery polymer, a butadiene-styrene rubbery polymer, a butadiene-acrylonitrile rubbery polymer, a butadiene-acrylate rubbery polymer, and a mixture thereof.

Additionally, the butadiene-based rubbery polymer may have an average particle diameter of 100 to 500 nm, for example, 100 to 400 nm. When the average particle diameter of the butadiene-based rubbery polymer satisfies the above range, a thermoplastic resin composition including the same may exhibit excellent appearance and impact resistance.

Meanwhile, the aromatic vinyl compound may be styrene, α-methylstyrene, p-methylstyrene, p-t-butylstyrene, 2,4-dimethylstyrene, chlorostyrene, vinyltoluene, vinyl naphthalene, or a combination thereof, and specifically styrene may be used. Additionally, the alkyl (meth)acrylate may be a C1 to C10 alkyl (meth)acrylate, and specifically, methyl methacrylate may be used.

The shell of the (C) butadiene-based rubber-modified aromatic vinyl compound-alkyl (meth)acrylate graft copolymer may be formed by graft polymerizing a monomer mixture of 70 to 80 wt% of the aromatic vinyl compound and 20 to 30 wt% of the alkyl (meth)acrylate onto the core.

Based on the solid content of the (C) butadiene-based rubber-modified aromatic vinyl compound-alkyl (meth)acrylate graft copolymer, an amount of the core composed of the butadiene-based rubbery polymer may be 50 to 70 wt%.

For example, the (C) butadiene-based rubber-modified aromatic vinyl compound-alkyl (meth)acrylate graft copolymer may be a methyl methacrylate-butadiene-styrene graft copolymer (MBS).

### [(D) Additive]

The thermoplastic resin composition of an embodiment may further include one or more additives necessary to balance the properties under conditions of maintaining excellent low-odor characteristics, chemical resistance, heat resistance, fluidity, and impact resistance, or depending on the final use of the thermoplastic resin composition.

Specifically, the (D) additive may include a flame retardant, a nucleating agent, a coupling agent, a glass fiber, a plasticizer, a lubricant, an antibacterial agent, a release agent, an antioxidant, a light stabilizer, an antistatic agent, a pigment, a dye, and the like, and these may be used alone or in combination of two or more.

The (D) additive may be appropriately included within a range that does not impair the physical properties of the thermoplastic resin composition, and may be included in an amount of less than or equal to 20 parts by weight based on 100 parts by weight of the (A) base resin, but is not limited thereto.

### (Molded Article)

In another embodiment, a molded article using the thermoplastic resin composition is provided.

The thermoplastic resin composition may exhibit overall excellent low-odor characteristics, chemical resistance, heat resistance, fluidity, and impact resistance. Accordingly, the molded article using the thermoplastic resin composition according to an embodiment is particularly suitable for use as an interior material for a vehicle.

The molded article according to an embodiment may be manufactured according to a known method. For example, the thermoplastic resin composition may be prepared by extrusion and/or injection molding.

The molded article of an embodiment may have a notched Izod impact strength of greater than or equal to 9 kgf·cm/cm as measured on a 1/8"-thick specimen according to ASTM D256.

In addition, the molded article of an embodiment may have a melt flow index (MI) of greater than or equal to 17 g/10 min measured at 250°C and 5 kg according to ISO 1133.

In addition, the molded article of an embodiment may have a heat deflection temperature (HDT) of greater than or equal to 100°C measured under a load of 4.6 kgf/cm² on a 6.4 mm-thick specimen according to ASTM D648.

### [Mode for Invention]

Hereinafter, the present invention is illustrated in more detail with reference to examples. These examples, however, are not in any sense to be interpreted as limiting the scope of the invention.

### Examples 1 to 8 and Comparative Examples 1 and 2

Each thermoplastic resin composition of Examples 1 to 8 and Comparative Examples 1 and 2 was prepared by mixing each component and common additive according to the compositions described in Tables 1 and 2.

**(Table 1)**

| | | unit | Comparativ e Example 1 | Comparativ e Example 2 | Exam ple 1 | Exam ple 2 | Exam ple 3 |
|---|---|---|---|---|---|---|---|
| A | A-1 | wt% | 23 | 23 | 17 | 17 | 17 |
| | A-2 | wt% | - | 30 | 30 | 30 | 30 |
| | A-3 | wt% | 77 | 37 | 30 | 30 | 30 |
| | A-4 | wt% | - | 10 | 3 | 3 | 3 |
| | A-5 | wt% | - | - | 20 | 20 | 20 |
| B | | parts by weight | - | - | 1 | 3 | 5 |
| C | | parts by weight | - | - | - | - | - |

**(Table 2)**

| | | unit | Exampl e 4 | Exampl e 5 | Exampl e 6 | Exampl e 7 | Exampl e 8 |
|---|---|---|---|---|---|---|---|
| A | A-1 | wt% | 10 | 15 | 17 | 17 | 17 |
| | A-2 | wt% | 40 | 35 | 30 | 30 | 30 |
| | A-3 | wt% | 30 | 25 | 30 | 30 | 30 |
| | A-4 | wt% | 5 | 2 | 3 | 3 | 3 |
| | A-5 | wt% | 15 | 23 | 20 | 20 | 20 |
| B | | parts by weight | 3 | 3 | 3 | 3 | 3 |
| C | | parts by weight | - | - | 1 | 2 | 5 |

Each component described in Tables 1 and 2 is as follows.

### (A) Base Resin

### (A-1) Butadiene-based Rubber-modified Aromatic Vinyl Compound-Vinyl Cyanide Compound Graft Copolymer

Core-shell type acrylonitrile-butadiene-styrene graft copolymer manufactured by graft-polymerizing a mixture of acrylonitrile and styrene in a weight ratio of about 25 : 75 onto a butadiene rubbery polymer (core) having an average particle diameter of about 270 nm to include about 58 wt% (based on a solid content) of the butadiene rubbery polymer (g-ABS, Manufacturer: Lotte Chemical Corp.)

### (A-2) Polybutylene Terephthalate Resin

Polybutylene terephthalate resin with an intrinsic viscosity [η] of about 1.2 dl/g, which was measured according to ASTM D4603 (PBT, Manufacturer: Shinkong)

### (A-3) Aromatic Vinyl Compound-Vinyl Cyanide Compound Copolymer

Styrene-acrylonitrile copolymer manufactured by copolymerizing a monomer mixture of about 27 wt% of acrylonitrile and about 73 wt% of styrene and having a weight average molecular weight of about 95,000 g/mol (SAN, Manufacturer: Lotte Chemical Corp.)

### (A-4) Epoxy group-containing (Meth)acrylate-Aromatic Vinyl Compound-Vinyl Cyanide Compound Copolymer

Glycidyl methacrylate-styrene-acrylonitrile copolymer manufactured by copolymerizing a monomer mixture of about 0.5 wt% of glycidyl methacrylate, about 70.5 wt% of styrene, and about 29 wt% of acrylonitrile and having a weight average molecular weight of about 120,000 g/mol (GMA-SAN or SAG, Manufacturer: Lotte Chemical Corp.)

### (A-5) α-Methylstyrene-Aromatic Vinyl Compound-Vinyl Cyanide Compound Copolymer

α-Methylstyrene-styrene-acrylonitrile copolymer manufactured by copolymerizing a monomer mixture of about 54 wt% of α-methylstyrene, about 27 wt% of acrylonitrile, and about 19 wt% of styrene and having a weight average molecular weight of about 160,000 g/mol (AMS-SAN, Manufacturer: Lotte Chemical Corp.)

### (B) Aromatic Vinyl Compound-Vinyl Cyanide Compound-Maleic Anhydride Copolymer

Styrene-acrylonitrile-maleic anhydride copolymer manufactured by copolymerizing a monomer mixture of about 26.5 wt% of acrylonitrile, about 68 wt% of styrene, and about 5.5 wt% of maleic anhydride and having a weight average molecular weight of about 90,000 g/mol (SAN-MAH, Manufacturer: Fine-blend Polymer)

### (C) Butadiene-based Rubber Modified Aromatic Vinyl Compound-Alkyl (meth)acrylate Graft Copolymer

Core-shell type methyl methacrylate-butadiene-styrene graft copolymer having about 61 wt% (based on a solid content) of a bi-modal butadiene rubbery polymer prepared by mixing a butadiene rubbery polymer with an average particle diameter of about 100 nm and a butadiene rubbery polymer with an average particle diameter of about 400 nm were mixed (MBS, Manufacturer: Arkema)

### Evaluation Examples

### (1) Manufacturing of Molded Article Specimens for Evaluation

Each pellet-type thermoplastic resin composition was prepared by adding components to a mixer according to compositions shown in Tables 1 to 2, adding 0.8 parts by weight of ethylene bis stearamide (EBS) and 2.5 parts by weight of a masterbatch including about 40 wt% of carbon black based on 100 parts by weight of each (A) base resin and a carrier resin of a styrene-acrylonitrile copolymer (SAN) as common additives thereto and mixing them, and then, extruding the mixture by using a twin-screw extruder with L/D=29 and Φ=45 mm at a barrel temperature of about 220°C. Each of the pellets was dried at about 80°C for about 2 hours and injection-molded into specimens for property evaluation by using a 6 oz injection molding machine at a cylinder temperature of about 230°C and a mold temperature of about 60°C.

### (2) Impact Resistance

1/8"-thick specimens were measured with respect to notched Izod impact strength (unit: kgf·cm/cm) according to ASTM D256.

### (3) Fluidity

A melt flow index (MI, unit: g/10 min) was measured under conditions of 250°C and 5 kg according to ISO 1133.

### (4) Heat Resistance

6.4 mm-thick specimens were measured with respect to a heat deflection temperature (HDT, unit: °C) under a load of 4.6 kgf/cm² according to ASTM D648.

### (5) Chemical Resistance

The specimens for tensile strength evaluation according to ASTM D638 were bent to a strain of 0.5% and then, fixed and placed on a jig, and then, a car air freshener (Product name: Sandokkaebi Membrane, Manufacturer: Sandokkaebi) was applied onto the specimen surface. Then, the specimen surface was visually observed to see if cracks occurred.

After leaving the specimens for more than one day immediately after applying the car air freshener, chemical resistances of the specimens were evaluated by determining a degree of the cracks on the specimen surface according to the following criteria.
⊚: No cracks, excellent chemical resistance
O: Almost no cracks, good chemical resistance
X: Cracks occur, poor chemical resistance

### (6) Odor Characteristics

Each of the pellet samples was measured with respect to a total content (Residual Total Volatile Matter (RTVM), unit: ppm) of styrene and acrylonitrile, which are residual volatile components, at 250°C by using GC/MS (Gas Chromatography/Mass Spectrometry). The higher residual volatile component content, the more odor. The measurement was performed under the following conditions in the following pre-treatment method.
- Measurement condition

**(Table 3)**

| Parameter | Condition |
|---|---|
| Column | INNOWAX (length 30 M, ID 0.53 nm, film thickness 0.88 µm) |
| Temp. Prog. | 40°C (4 min) → 20°C/min → 250°C (4 min) |
| Flow rate | 10 mL/min (Head pressure 6.57 Pa) |
| Injector | S/SL injector |
| Split ratio | 5:01 |
| Detector | FID |
| Injection Vol. | 1µℓ |
| Injector Temp. | 150°C |

- Pre-treatment method
1) 0.2 to 0.3 g of each of the samples was added to a 20 mL vial.
2) 9 mL of N-methyl-2-pyrrolidone (NMP) was added thereto and then, shaken by using a shaker for 10 hours or more to dissolve the added sample.
3) 1 mL of an internal standard solution was added thereto and then, stirred and filtered with a 0.45 µm filter.

**(Table 4)**

| | Comparative Example 1 | Comparative Example 2 | Exam ple 1 | Exam ple 2 | Exam ple 3 |
|---|---|---|---|---|---|
| Izod impact strength | 21 | 35 | 13 | 13 | 11 |
| Melt flow index | 39 | 25 | 24 | 24 | 21 |
| Heat deflection temperature | 99 | 97 | 101 | 102 | 102 |
| Crack occurrence degree | X | O | O | O | O |
| RTVM | 900 | 550 | 550 | 550 | 550 |

**(Table 5)**

| | Example 4 | Example 5 | Example 6 | Example 7 | Example 8 |
|---|---|---|---|---|---|
| Izod impact strength | 9 | 12 | 13 | 14 | 16 |
| Melt flow index | 33 | 24 | 24 | 24 | 17 |
| Heat deflection temperature | 101 | 101 | 102 | 102 | 101 |
| Crack occurrence degree | O | O | O | O | O |
| RTVM | 480 | 480 | 550 | 550 | 550 |

Referring to Tables 4 and 5, the thermoplastic resin compositions of Examples 1 to 8, compared with the thermoplastic resin compositions of Comparative Examples 1 and 2, exhibited overall excellent impact resistance, low-odor characteristics, chemical resistance, heat resistance, and fluidity. Accordingly, the thermoplastic resin composition according to an embodiment, which was represented by Examples 1 to 8, turned out to be particularly suitable for implement of an interior material for a vehicle.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A thermoplastic resin composition, comprising:
(B) 1 to 5 parts by weight of an aromatic vinyl compound-vinyl cyanide compound-maleic anhydride copolymer, based on 100 parts by weight of (A) a base resin, wherein the base resin comprises:
(A-1) 10 to 25 wt% of a butadiene-based rubber-modified aromatic vinyl compound-vinyl cyanide compound graft copolymer;
(A-2) 20 to 40 wt% of a polybutylene terephthalate resin;
(A-3) 25 to 45 wt% of an aromatic vinyl compound-vinyl cyanide compound copolymer;
(A-4) 2 to 6 wt% of an epoxy group-containing (meth)acrylate-aromatic vinyl compound-vinyl cyanide compound copolymer; and
(A-5) 15 to 25 wt% of an α-methylstyrene-aromatic vinyl compound-vinyl cyanide compound copolymer.

2. The thermoplastic resin composition of claim 1, wherein
the (A-1) butadiene-based rubber-modified aromatic vinyl compound-vinyl cyanide compound graft copolymer is a particle having a core-shell structure including a core composed of a butadiene-based rubbery polymer; and a shell formed by graft polymerization of an aromatic vinyl compound-vinyl cyanide compound copolymer onto the core.

3. The thermoplastic resin composition of claim 1 or claim 2, wherein
the (A-1) butadiene-based rubber-modified aromatic vinyl compound-vinyl cyanide compound graft copolymer is an acrylonitrile-butadiene-styrene graft copolymer.

4. The thermoplastic resin composition of any one of claim 1 to claim 3, wherein
the (A-2) polybutylene terephthalate resin has an intrinsic viscosity [η] measured according to ASTM D4603 of 0.6 to 1.5 dl/g, for example, 0.5 to 1.4 dl/g.

5. The thermoplastic resin composition of any one of claim 1 to claim 4, wherein
the (A-3) aromatic vinyl compound-vinyl cyanide compound copolymer is a styrene-acrylonitrile copolymer.

6. The thermoplastic resin composition of any one of claim 1 to claim 5, wherein
the (A-4) epoxy group-containing (meth)acrylate-aromatic vinyl compound-vinyl cyanide compound copolymer is a glycidyl methacrylate-styrene-acrylonitrile copolymer.

7. The thermoplastic resin composition of any one of claim 1 to claim 6, wherein
the (A-5) α-methylstyrene-aromatic vinyl compound-vinyl cyanide compound copolymer is an α-methylstyrene-styrene-acrylonitrile copolymer.

8. The thermoplastic resin composition of any one of claim 1 to claim 7, wherein
the (B) aromatic vinyl compound-vinyl cyanide compound-maleic anhydride copolymer is a styrene-acrylonitrile-maleic anhydride copolymer.

9. The thermoplastic resin composition of any one of claim 1 to claim 8, wherein
the thermoplastic resin composition further comprises 1 to 5 parts by weight of (C) a butadiene-based rubber-modified aromatic vinyl compound-alkyl(meth)acrylate graft copolymer.

10. A molded article using the thermoplastic resin composition of any one of claim 1 to claim 9.

11. The molded article of claim 10, wherein
the molded article has a notched Izod impact strength of greater than or equal to 9 kgf·cm/cm as measured on a 1/8"-thick specimen according to ASTM D256.

12. The molded article of claim 10 or claim 11, wherein
the molded article has a melt flow index (MI) of greater than or equal to 17 g/10 min measured at 250 °C and 5 kg according to ISO 1133.

13. The molded article of any one of claim 10 to claim 12, wherein
the molded article has a heat deflection temperature of greater than or equal to 100 °C measured under a load of 4.6 kgf/cm² on a 6.4 mm-thick specimen according to ASTM D648.
